# EUROPEAN PATENT SPECIFICATION

(11) **EP 3 862 260 B1**
(45) Date of publication and mention of the grant of the patent: **17.12.2025**
(21) Application number: 20305126.3
(22) Date of filing: 10.02.2020
(51) Int. Cl.: B64C 1/14, B64D 25/00, E05F 15/50

(54) **EMERGENCY DOOR ACTUATION**
TÜRNOTBETÄTIGUNG
ACTIONNEMENT DE PORTE D'URGENCE

(43) Date of publication of application: 11.08.2021
(73) Proprietor: Ratier-Figeac SAS, 46101 Figeac Cedex (FR)
(72) Inventor: HOURADOU, Emmanuel, Figeac 46100 (FR); PLATA, Raphael, Figeac 46100 (FR)
(74) Representative: Dehns

(56) References cited:
- WO-A1-2010/028662
- US-A1- 2006 230 919
- US-A1- 2013 097 930
- US-A1- 2013 145 928

## Description

### Technical field

This disclosure relates to devices for emergency door actuation, in particular for aircraft doors.

### Background

Doors, such are those which are commonly found in aircraft, are provided with actuation devices which are intended for use in emergency situations. These emergency actuation devices operate to force the door open rapidly in an emergency. For example, in aircraft for both civil and military applications, such devices are fitted to aircraft evacuation doors, which are intended to be used to evacuate people quickly from the aircraft in an emergency. Emergency actuation devices are provided on aircraft doors which normally function as embarkation/ disembarkation doors for passengers, crew and/or support staff also function as emergency doors. In this application the emergency actuation devices must operate to force the door open in an emergency situation, but they should not interfere with the normal operation of the door (i.e. opening and closing in non-emergency situations).

Known emergency actuation devices for doors generally comprises a pneumatic cylinder with a piston and a chamber. The pneumatic cylinder is connected to the opening mechanism of the door. In the case of an emergency, the chamber is provided with a supply of pressurised gas which acts upon the piston, urging it to an extended position thereby opening the door. Generally, during normal operation the chamber is vented to the atmosphere to allow the normal operation of the door.

Known emergency door actuation devices commonly include a percussion device having a membrane which inhibits the flow of the pressurised gas from a gas supply, such as a tank or a pyrotechnic gas generator, to the pneumatic cylinder. Following a manual activation, for example with an emergency lever or button, the membrane is pierced which allows pressurised gas to flow from a gas supply into the chamber. After operation of the emergency door actuation device, the supplied gas must be allowed to vent from the system or be forced from the system in order for the door to be closed again. In known systems, it is necessary to wait until all pressurised gas released into the various components of the device and the gas from the pressurised gas supply itself is vented. In some situations, it can often be important to close the door quickly. Waiting for the gas to exhaust complete from the actuation system can cause unacceptable delays in reclosing the door.

Therefore, there is a need to improve existing emergency actuation arrangements for doors.

US 2013/145928 A1 discloses an aircraft door actuator which is adapted to set a chamber of a pneumatic cylinder for the opening of the door to atmospheric pressure in a rapid manner once the door is open.

WO 2010/028662 A1 discloses an actuation system including a fluid operated actuator and a control valve.

US 2006/230919 A1 discloses an apparatus including a reservoir of a pressurized fluid connected to a supply conduit.

### Summary

According to a first aspect of this disclosure, there is provided an emergency actuation device for opening a door, the emergency actuation device comprising: at least one pressurised gas supply; an actuator including: an actuator chamber, an actuator piston moveable between a retracted position and a fully extended position to open the door, a vent for venting the actuator chamber when the actuator piston is in its extended position. The emergency actuation device further comprising a percussion device including a percussion piston moveable on activation of the percussion device from a storage position in which the pressurised gas supply is isolated from the actuator to an activated position in which the pressurised gas supply is coupled to the actuator. Wherein the actuator is coupled to the percussion device; and wherein the actuator is configured such that movement of the actuator piston towards its activated position resets the percussion piston. The emergency actuation device is characterised by a trigger operably coupled to the percussion device for activating the percussion device, wherein activation of the trigger results in a force being applied to the percussion piston.

The emergency actuation device utilises only the pressurised gas required to operate the actuator. Excess gas is not wasted because the flow of pressurised gas supply into the system is stopped (cut off) following operation of the actuator. Furthermore, since there is a limited amount of pressurised gas to be evacuated from the device, the time taken to vent the device is less than with conventional devices. This means that the actuator returns to atmospheric pressure more quickly and consequently the door can be reclosed in a much shorter time following activation.

Before activation of the emergency actuation device energy is stored in the form of the pressurised gas. Following activation, the energy is released and transferred to the actuator and used to open the door. The emergency actuation device consumes only the energy required.

The actuator may be configured such that movement of the actuator piston past an intermediate position causes the percussion piston to return to its storage position.

The emergency actuation device may comprise a pressure quick release valve provided between the percussion device and the actuator. The pressure quick release valve may be operable to move the percussion piston to its rest position;
The actuator may be configured to operate the pressure quick release valve. The actuator may be configured to move the piston of the pressure quick release valve from its non-operational position.

The actuation chamber may include an outlet in fluid communication with the pressure quick release valve. The outlet may be located such that when the actuator piston has passed its intermediate position pressurised gas flows to the pressure quick release valve.

The actuator chamber may be coupled to the pressure quick release valve such that when the actuator piston passes the intermediate position, the actuator chamber is fluid communication with the pressure quick release valve to operate the pressure quick release valve.

The percussion device may include an inlet in fluid communication with the pressurised gas supply. The percussion device may include an outlet in fluid communication with the actuator. The percussion device may be configured such that when the percussion piston is in its storage position, a seal is located between the inlet and the outlet. The percussion device may be configured such that when the percussion piston is in its activated position, the inlet is in fluid communication with the outlet.

The pressurised gas supply may be at least one gas storage tank. The pressurised gas supply may be at least one pyrotechnic gas generator. The pressurised gas may be nitrogen.

The percussion device may be integrally formed with the pressure quick release valve. The percussion device may be coupled to the pressure quick release valve. The percussion device may be coupled to the pressure quick release valve such that movement of the pqrv (pressure quick release valve) piston causes a reset of the percussion device. In other words, the movement of the pqrv (pressure quick release valve) causes the percussion piston to return to its storage position.

The emergency actuation device may comprise a resilient means. The resilient means may bias the percussion piston to its storage position. The resilient means may bias the pressure quick release valve piston to a non-activated position. The resilient means may be a spring. The resilient means may be a coil spring.

The pressure quick release valve piston may be configured to return to its non-activated position after the percussion device is reset.

The actuator vent may be configured for atmospheric venting. The actuator may comprise two or more vents each vent being configured for venting the actuator chamber when the actuator piston is in its extended position.

According to a further aspect of this disclosure, there is provided a door comprising an emergency actuation device according to the aspects above, wherein the actuator includes an actuator body, and wherein one of the actuator body and the piston is coupled to the door, and the other of the actuator body and the piston is coupled to a door frame.

The door may be an aircraft door. The door may be an aircraft evacuation door. The door may be provided in a building.

Where reference is made to different examples or sets of examples, it should be understood that these are not necessarily distinct but may overlap.

### Detailed description

Certain examples of this disclosure will now be described, by way of example only, and with reference to the accompanying drawings, in which:
Figure 1 shows a schematic view of an emergency actuation device according to an example of the present disclosure in a non-operational position;
Figure 2 shows a schematic view of the emergency actuation device of Figure 1 in a first operational position;
Figure 3 shows a schematic view of the emergency actuation device of Figure 1 in a second operational position;
Figure 4 shows a schematic view of the emergency actuation device of Figure 1 in a third operational position;
Figure 5 shows a schematic view of the emergency actuation device of Figure 1 in a fourth operational position; and
Figure 6 shows a schematic view of the emergency actuation device of Figure 1 after operation.

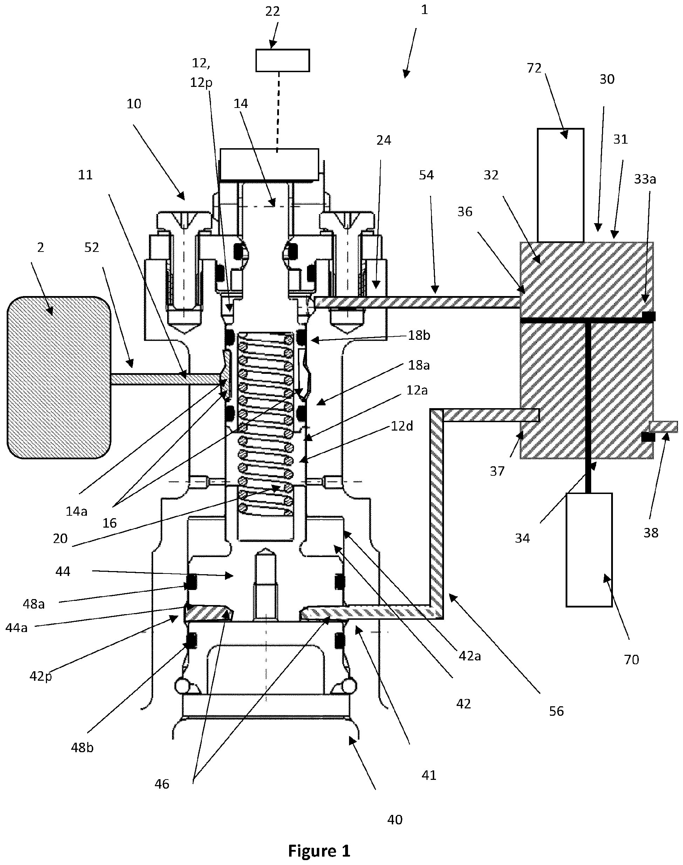

Figure 1 shows an emergency actuation device 1, comprising a pressurised gas supply 2; a percussion device 10, a user interface 22, an actuator 30, and a pressure quick release valve (PQRV) 40.

In the example shown in Figure, 1 the percussion device 10 is formed integrally with the pressure quick release valve (PQRV) 40. In other examples, these components can be formed separately and coupled together.

The pressurised gas supply 2 is any suitable device or arrangement for providing a supply of pressurised gas, such as a gas tank or a pyrotechnic gas generator. It will be appreciated that the pressurised gas supply 2 may comprise two or more gas tanks, two or more pyrotechnic gas generators.

The pressurised gas supply 2 is fluidly coupled to an inlet 11 of the percussion device 10 via a first duct 52. The percussion device 10 includes a chamber 12 having a chamber wall 12a, and a percussion piston 14 moveable within the chamber 12. A spring 20 biases the percussion piston 14 so that it is urged into in a first position in a proximal portion 12p of the chamber 12. The inlet 11 leads to a ring shaped chamber 16, which is formed between a circumferential recess 14a in the percussion piston 14 and the chamber wall 12a. Two seals 18a, 18b, for example as O-rings, are provided on the percussion piston 14, providing a seal with the chamber wall 12a, such that in the position shown in figure 1, the ring shaped chamber 16 is not in fluid communication with the proximal portion 12p and a distal portion 12d of the chamber 12. A trigger (or user interface) 22 is coupled to the percussion device 10 in such a way that on activation of the trigger 22 a downwards force on the percussion piston 14. The trigger 22 could be mechanically coupled to the percussion piston 14, for example the trigger 22 could be a lever or button with a mechanical linkage to the percussion piston 14. Alternatively, the trigger 22 could be electronically or wirelessly coupled to the percussion piston 14, for example trigger 22 could be an electrical switch powering a small electrical actuator that pushes on the percussion piston 14.

An outlet 24 of the percussion device 10 is fluidly coupled to an inlet 36 of the actuator 30 via a second duct 54. The actuator 30 is a pneumatic cylinder having a body 31, a variable volume chamber 32 and an actuator piston 34. The actuator piston 34 is moveable from a retracted position to an extended position. The actuator 30 includes a vent 38 for atmospheric venting, and an outlet 37. The exhaust vent 38 is further along the piston stroke than the outlet 37.

As schematically shown in this example, the actuator piston 34 is coupled to a door 70 and the cylinder body 31 is coupled to a door frame 72 of the door 70. However, it will be appreciated that the actuator piston 34 could be coupled to the door frame 72 and the cylinder body 31 could be coupled to the door 70.

The outlet 37 of the actuator 30 is fluidly coupled to an inlet 41 of the pressure quick release valve (PQRV) 40 via a third duct 56. The PQRV 40 includes a chamber 42 and a PQRV piston 44 which is movable within the chamber 42, and a seal 48a provided on the PQRV piston 44. The inlet 41 leads to a ring shaped chamber 46, which is formed between a shoulder 44a on the PQRV piston 44 and a chamber wall 42a. The seal 48a prevents gas escaping from the ring shaped chamber 46. The PQRV 40 includes a second seal 48b. The spring 20 biases the PQRV piston 44 in its non-operational position at a proximal portion 42p of the chamber 42.

Figure 1 represents the emergency actuation device in a non-operational or stored configuration. A spring 20 is provided which acts upon both the percussion piston 14 and the PQRV piston 44. The biasing force of the spring 20 urges the percussion piston 14 upwards in its storage (non-operational) position. Due to the seals 18a 18b, pressurised gas from the pressurised gas supply 2 is retained in the ring shaped chamber 16 within the percussion device 10. The actuator piston 34 is in its retracted position, and an abutment 33a prevents the actuator piston 34 from moving past the inlet 36. Atmospheric gas fills the actuator chamber 32, the second and third ducts 54, 56 and the PQRV ring-shaped chamber 46. In the PQRV 40, the seals 48a and 48b retain the atmospheric gas in the ring shaped chamber 46, and the spring 20 urges the PQRV piston 44 into its non-operational position.

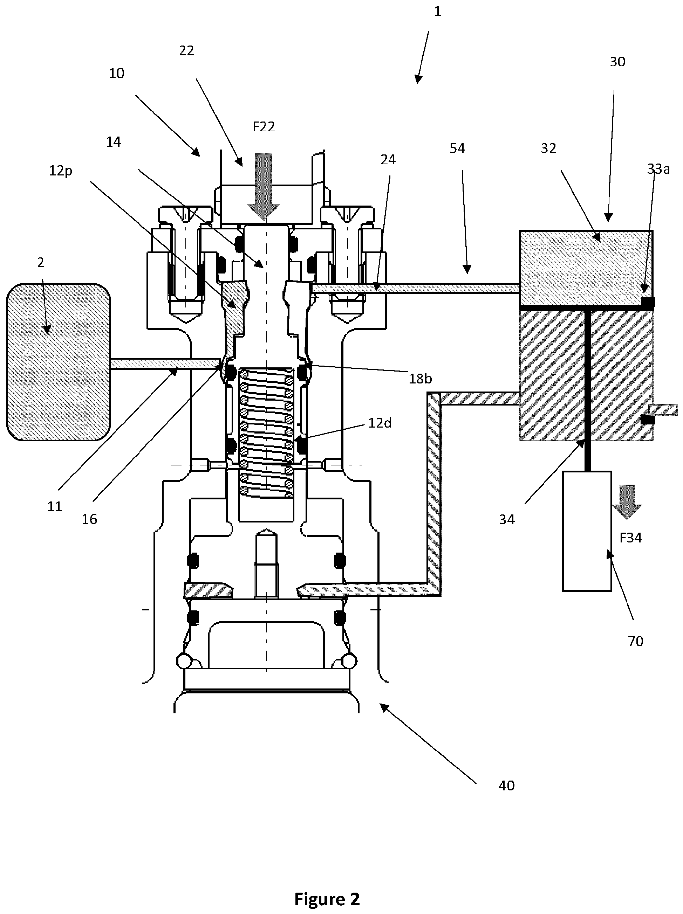

Figures 2 to 6 schematically show the operational stages of the emergency actuation device 1 of Figure 1. For ease of understanding, the door and door frame are not represented in all Figures, and not all reference signs are depicted.

Figure 2 shows the emergency actuation device 1 of Figure 1 in a first operational position, immediately following activation of the trigger 22. Activation of the trigger 22 results in a force F22 being applied to the percussion piston 14. The percussion piston 14 moves away from its storage position and the first seal 18b is no longer in contact with the chamber wall 12a, which means that the ring shaped chamber 16 is in fluid communication with the proximal portion 12p of the chamber 12. The pressurised gas from the pressurised gas supply 2 flows into the proximal portion 12p of the chamber 12, through the outlet 24, into the first duct 52 and then into the actuator chamber 32. Pressurised gas in the actuator chamber 32 exerts a force F34 on the actuator piston 34, and the actuator piston starts to move away from its retracted position.

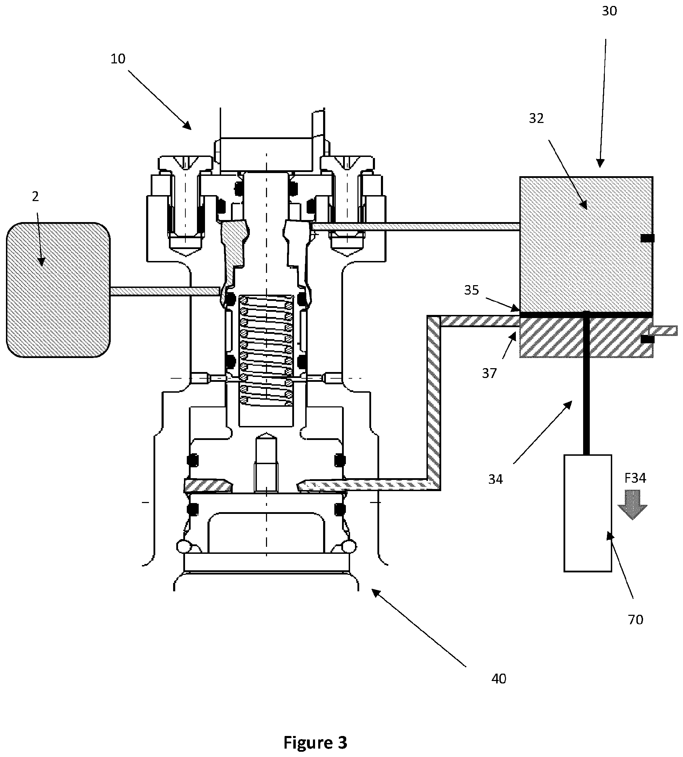

Figure 3 shows the emergency actuation device 1 of Figure 1 in a second operational position. Pressurised gas continues to flow from the pressurised gas supply 2, through the percussion device 10 and into the actuator chamber 32. As the volume of pressurised gas in the actuator chamber 32 increases, the force F34 urges the actuator piston 34 further away from its retracted position, to an intermediate position.

In this intermediate position, as the actuator piston 34 has not moved past the actuator outlet 37, so the pressurised gas continues to build up in the actuator chamber 32. The movement of the actuator piston 34 forces open the door 70.

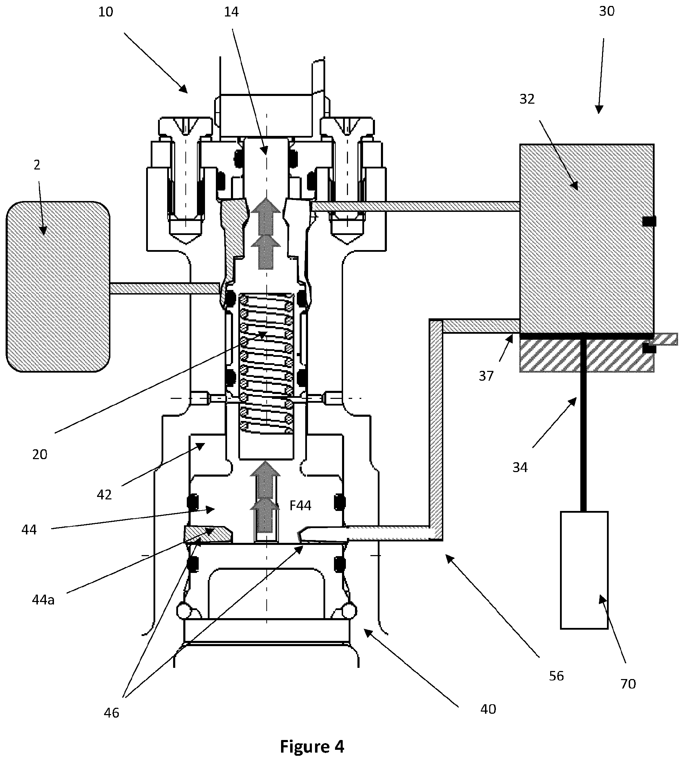

Figure 4 shows the emergency actuation device 1 of Figure 1 in a third operational position in which the actuator piston 34 has travelled beyond the intermediate position, i.e. beyond the actuator outlet 37, to its fully extended position. A second abutment 33b limits the travel of the actuator piston 44. This means that the actuator chamber 32 is in fluid communication with the third duct 56, so that the pressurised gas passes through the third duct 56 to the ring shaped chamber 46 of the PQRV 40. As the pressurised gas enters the chamber 46 it urges the PQRV piston 44 away from its non-operational position, with a force F44. As the PQRV piston 44 moves upwards, it pushes against the spring 20 which in turn imparts a force on the percussion piston 14.

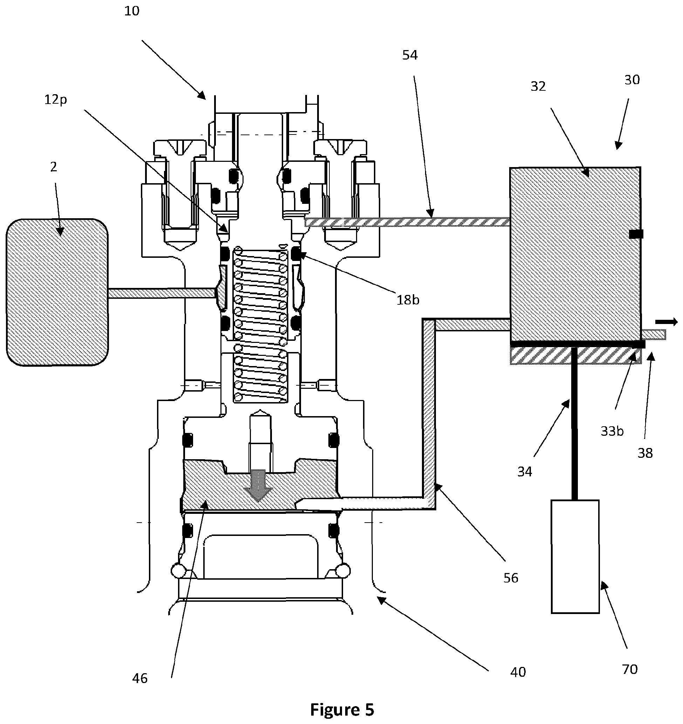

Figure 5 shows the emergency actuation device 1 of Figure 1 in a fourth operational position in which the PQRV piston 44 and spring 20 have pushed the percussion piston 14 back into its non-operational position. The first seal 18b now prevents further pressurised gas from passing into the proximal portion 12p of the chamber 12.. This means that any pressurised gas which was not used during the operation of the emergency actuation device 10 remains in the pressurised gas supply 2, first duct 52 and ring shaped chamber 16. In other words, the unused pressurised gas need not be vented from the device 1.

In the actuator 30, the actuator piston 34 has travelled to its fully extended position, beyond the actuator exhaust 38. This results in pressurised gas venting out through the exhaust 38 from the remainder of the device 1, i.e. from the second and third ducts 54, 56, the PQRV 40 and the actuator 30. As the pressurised gas vents from the PQRV 10, the spring 20 urges the PQRV piston 44 back into its non-operational position.

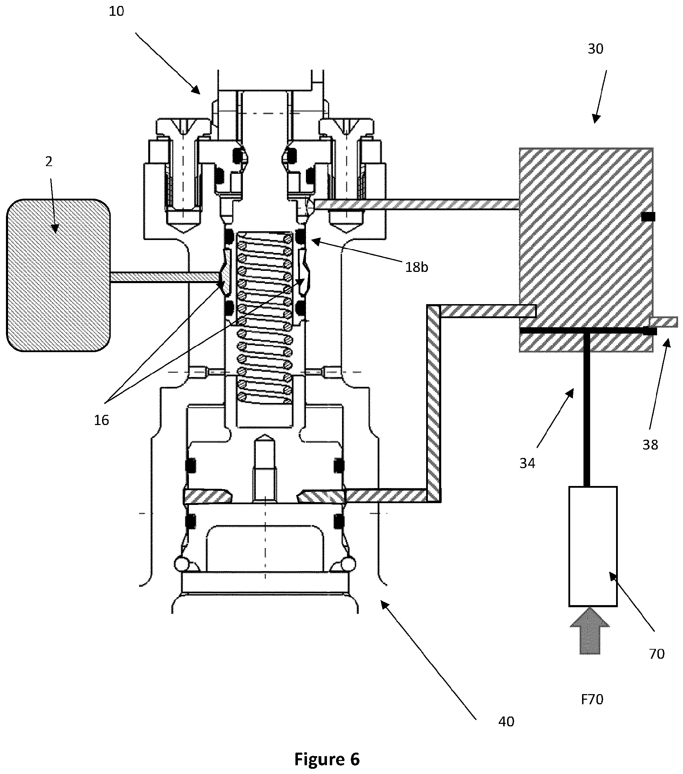

Figure 6 shows the emergency actuation device 1 of Figure 1 in a fifth operational position in which substantially all the pressurised gas from the second and third ducts 54, 56, the PQRV 40 and the actuator 30 has been vented from the system. Therefore, the actuator chamber 32 is essentially at atmospheric pressure, and the actuator piston 34 is at its fully extended position. With the device in this state, an operator can apply a force F70 to the door 70 to close it, and the emergency actuation device 1 is reset to its non-operational or stored configuration.

It will be appreciated that this type of emergency activation device can be used for doors in a wide range of vehicular applications, for example in aircraft and other vehicles. They can also be used in other industries such construction, for example, as emergency actuation devices for doors in buildings or rooms. Further, it is noted that in all these applications, the term door can also refer to doors for chambers or compartments which are not intended for people to pass through.

In certain situations two or more emergency activation devices can be provided on a single door. In this case, a single trigger can be coupled to the percussion device of each emergency activation devices in such a way that on activation of the trigger a downwards force on each percussion piston 14.

The pressurised gas may be nitrogen, compressed air or any other suitable compressed gas.

While the disclosure has been described in detail in connection with only a limited number of examples, it should be readily understood that the disclosure is not limited to such disclosed examples. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. An emergency actuation device (1) for opening a door (70), comprising:
at least one gas supply (2);
an actuator (30) including:
an actuator chamber (32);
an actuator piston (34) moveable between a retracted position and a fully extended position to open the door (70),
a vent (38) for venting the actuator chamber (32) when the actuator piston (34) is in its extended position;
a percussion device (10) including a percussion piston (14) moveable on activation of the percussion device (10) from a storage position in which the pressurised gas supply (2) is isolated from the actuator (30) to an activated position in which the pressurised gas supply (2) is coupled to the actuator (30);
wherein the actuator (30) is coupled to the percussion device (10); and wherein the actuator (30) is configured such that movement of the actuator piston (34) towards its activated position resets the percussion piston (14); and
wherein the emergency actuation device (1) is **characterised by** a trigger (22) operably coupled to the percussion device (10) for activating the percussion device (10), wherein activation of the trigger (22) results in a force (F22) being applied to the percussion piston (14).

2. The emergency actuation device (1) according to claim 1, wherein the actuator (30) is configured such that movement of the actuator piston (34) past an intermediate position (35) causes the percussion piston (14) to return to its storage position.

3. The emergency actuation device (1) according to claim 1 or 2, further comprising a pressure quick release valve (40) provided between the percussion device (10) and the actuator (30), wherein the pressure quick release valve (40) is operable to move the percussion piston (14) to its rest position.

4. The emergency actuation device (1) according to claim 3, wherein the actuator (30) is configured to operate the pressure quick release valve (40).

5. The emergency actuation device (1) according to claim 3 or 4, wherein the actuator chamber (32) includes an outlet (37) in fluid communication with the pressure quick release valve (40), and wherein the outlet (37) is located such that when the actuator piston (44) has passed its intermediate position (35) pressurised gas flows to the pressure quick release valve.

6. The emergency actuation device (1) according to any of the preceding claims, wherein the percussion device (10) includes an inlet (11) in fluid communication with the pressurised gas supply (2) and an outlet (24) in fluid communication with the actuator (30),
wherein when the percussion piston (14) is in its storage position, a seal (18b) is located between the inlet (11) and the outlet (24); and
when the percussion piston (14) is in its activated position, the inlet (11) is in fluid communication with the outlet (24).

7. The emergency actuation device (1) according to any of the preceding claims, wherein the pressurised gas supply (2) is at least one gas storage tank.

8. The emergency actuation device (1) according to any of the preceding claims, wherein the pressurised gas is nitrogen.

9. The emergency actuation device (1) according to any of the preceding claims, wherein the percussion device (10) is integrally formed with the pressure quick release valve (40).

10. The emergency actuation device (1) according to claim 9, further comprising a resilient means (20) biasing the percussion piston (14) in its storage position.

11. The emergency actuation device (1) according to claim 10, wherein the resilient means (20) biases the pressure quick release valve piston (44) to a non-activated position.

12. The emergency actuation device (1) according to claim 11, wherein the pressure quick release valve piston (44) is configured to return to its non-activated position after the percussion device (10) is reset.

13. The emergency actuation device (1) according to any of the preceding claims, wherein the vent (38) is configured for atmospheric venting.

14. A door (70) comprising an emergency actuation device (1) according to any preceding claim, wherein the actuator (30) includes an actuator body (31) and wherein one of the actuator body (31) and the actuator piston (34) is coupled to the door (70), and the other of the actuator body (31) and the actuator piston (34) is coupled to a door frame (72).

## Patentansprüche

1. Notbetätigungsvorrichtung (1) zum Öffnen einer Tür (70), umfassend:
wenigstens eine Gasversorgung (2);
einen Aktuator (30), der beinhaltet:
eine Aktuatorkammer (32);
einen Aktuatorkolben (34), der zwischen einer eingefahrenen Position und einer vollständig ausgefahrenen Position beweglich ist, um die Tür (70) zu öffnen,
eine Entlüftung (38) zum Entlüften der Aktuatorkammer (32), wenn sich der Aktuatorkolben (34) in seiner ausgefahrenen Position befindet;
eine Schlagvorrichtung (10), die einen Schlagkolben (14) beinhaltet, der bei Aktivierung der Schlagvorrichtung (10) aus einer Speicherposition, in der die unter Druck stehende Gasversorgung (2) vom Aktuator (30) isoliert ist, in eine aktivierte Position beweglich ist, in der die unter Druck stehende Gasversorgung (2) mit dem Aktuator (30) gekoppelt ist;
wobei der Aktuator (30) mit der Schlagvorrichtung (10) gekoppelt ist; und wobei der Aktuator (30) derart konfiguriert ist, dass eine Bewegung des Aktuatorkolbens (34) in Richtung seiner aktivierten Position den Schlagkolben (14) zurücksetzt; und
wobei die Notbetätigungsvorrichtung (1) durch einen Auslöser (22) gekennzeichnet ist, der betriebsmäßig mit der Schlagvorrichtung (10) gekoppelt ist, um die Schlagvorrichtung (10) zu aktivieren, wobei die Aktivierung des Auslösers (22) dazu führt, dass eine Kraft (F22) auf den Schlagkolben (14) ausgeübt wird.

2. Die Notbetätigungsvorrichtung (1) nach Anspruch 1, wobei der Aktuator (30) derart konfiguriert ist, dass eine Bewegung des Aktuatorkolbens (34) über eine Zwischenposition (35) hinaus bewirkt, dass der Schlagkolben (14) in seine Speicherposition zurückkehrt.

3. Die Notbetätigungsvorrichtung (1) nach Anspruch 1 oder 2, ferner umfassend ein Druckschnellablassventil (40), das zwischen der Schlagvorrichtung (10) und dem Aktuator (30) bereitgestellt ist, wobei das Druckschnellablassventil (40) betätigbar ist, um den Schlagkolben (14) in seine Ruheposition zu bewegen.

4. Die Notbetätigungsvorrichtung (1) nach Anspruch 3, wobei der Aktuator (30) konfiguriert ist, um das Druckschnellablassventil (40) zu betätigen.

5. Die Notbetätigungsvorrichtung (1) nach Anspruch 3 oder 4, wobei die Aktuatorkammer (32) einen Auslass (37) in Fluidverbindung mit dem Druckschnellablassventil (40) beinhaltet und wobei der Auslass (37) so angeordnet ist, dass, wenn der Aktuatorkolben (44) seine Zwischenposition (35) passiert hat unter Druck stehendes Gas zu dem Druckschnellablassventil strömt.

6. Die Notbetätigungsvorrichtung (1) nach einem der vorhergehenden Ansprüche, wobei die Schlagvorrichtung (10) einen Einlass (11) in Fluidverbindung mit der unter Druck stehenden Gasversorgung (2) und einen Auslass (24) in Fluidverbindung mit dem Aktuator (30) beinhaltet,
wobei, wenn sich der Schlagkolben (14) in seiner Speicherposition befindet, sich eine Dichtung (18b) zwischen dem Einlass (11) und dem Auslass (24) befindet; und
wenn sich der Schlagkolben (14) in seiner aktivierten Position befindet, der Einlass (11) in Fluidverbindung mit dem Auslass (24) steht.

7. Die Notbetätigungsvorrichtung (1) nach einem der vorhergehenden Ansprüche, wobei die unter Druck stehende Gasversorgung (2) wenigstens ein Gasspeichertank ist.

8. Die Notbetätigungsvorrichtung (1) nach einem der vorhergehenden Ansprüche, wobei das unter Druck stehende Gas Stickstoff ist.

9. Die Notbetätigungsvorrichtung (1) nach einem der vorhergehenden Ansprüche, wobei die Schlagvorrichtung (10) einstückig mit dem Druckschnellablassventil (40) ausgebildet ist.

10. Die Notbetätigungsvorrichtung (1) nach Anspruch 9, ferner umfassend ein elastisches Mittel (20), das den Schlagkolben (14) in seine Speicherposition vorspannt.

11. Die Notbetätigungsvorrichtung (1) nach Anspruch 10, wobei das elastische Mittel (20) den Kolben (44) des Druckschnellablassventils in eine nicht aktivierte Position vorspannt.

12. Die Notbetätigungsvorrichtung (1) nach Anspruch 11, wobei der Kolben (44) des Druckschnellablassventils konfiguriert ist, um in seine nicht aktivierte Position zurückzukehren, nachdem die Schlagvorrichtung (10) zurückgesetzt wurde.

13. Die Notbetätigungsvorrichtung (1) nach einem der vorhergehenden Ansprüche, wobei die Entlüftung (38) für das atmosphärische Entlüften konfiguriert ist.

14. Tür (70), umfassend eine Notbetätigungsvorrichtung (1) nach einem der vorhergehenden Ansprüche, wobei der Aktuator (30) einen Aktuatorkörper (31) beinhaltet und wobei einer von dem Aktuatorkörper (31) und dem Aktuatorkolben (34) mit der Tür (70) gekoppelt ist, und der andere von dem Aktuatorkörper (31) und dem Aktuatorkolben (34) mit einem Türrahmen (72) gekoppelt ist.

## Revendications

1. Dispositif d'actionnement d'urgence (1) pour ouvrir une porte (70), comprenant :
au moins une alimentation en gaz (2) ;
un actionneur (30) comportant :
une chambre d'actionneur (32) ;
un piston d'actionneur (34) mobile entre une position rétractée et une position complètement étendue pour ouvrir la porte (70), un évent (38) pour ventiler la chambre d'actionneur (32) lorsque le piston d'actionneur (34) est dans sa position étendue ;
un dispositif de percussion (10) comprenant un piston de percussion (14) pouvant être déplacé lors de l'activation du dispositif de percussion (10) d'une position de stockage dans laquelle l'alimentation en gaz sous pression (2) est isolée de l'actionneur (30) à une position activée dans laquelle l'alimentation en gaz sous pression (2) est couplée à l'actionneur (30) ;
dans lequel l'actionneur (30) est couplé au dispositif de percussion (10) ; et dans lequel l'actionneur (30) est configuré de telle sorte que le mouvement du piston d'actionneur (34) vers sa position activée réinitialise le piston de percussion (14) ; et
dans lequel le dispositif d'actionnement d'urgence (1) est **caractérisé par** une gâchette (22) couplée de manière fonctionnelle au dispositif de percussion (10) pour activer le dispositif de percussion (10), dans lequel l'activation de la gâchette (22) entraîne l'application d'une force (F22) au piston de percussion (14).

2. Dispositif d'actionnement d'urgence (1) selon la revendication 1, dans lequel l'actionneur (30) est configuré de telle sorte que le mouvement du piston d'actionneur (34) au-delà d'une position intermédiaire (35) amène le piston de percussion (14) à revenir à sa position de stockage.

3. Dispositif d'actionnement d'urgence (1) selon la revendication 1 ou 2, comprenant en outre une soupape de libération rapide de pression (40) disposée entre le dispositif de percussion (10) et l'actionneur (30), dans lequel la soupape de libération rapide de pression (40) est actionnable pour déplacer le piston de percussion (14) vers sa position de repos.

4. Dispositif d'actionnement d'urgence (1) selon la revendication 3, dans lequel l'actionneur (30) est configuré pour actionner la soupape de libération rapide de pression (40).

5. Dispositif d'actionnement d'urgence (1) selon la revendication 3 ou 4, dans lequel la chambre d'actionneur (32) comprend une sortie (37) en communication fluidique avec la soupape de libération rapide de pression (40), et dans lequel la sortie (37) est située de telle sorte que lorsque le piston d'actionneur (44) a dépassé sa position intermédiaire (35) du gaz sous pression s'écoule vers la soupape de libération rapide de pression.

6. Dispositif d'actionnement d'urgence (1) selon l'une quelconque des revendications précédentes, dans lequel le dispositif de percussion (10) comprend une entrée (11) en communication fluidique avec l'alimentation en gaz sous pression (2) et une sortie (24) en communication fluidique avec l'actionneur (30),
dans lequel, lorsque le piston de percussion (14) est dans sa position de stockage, un joint (18b) est situé entre l'entrée (11) et la sortie (24) ; et
lorsque le piston de percussion (14) est dans sa position activée, l'entrée (11) est en communication fluidique avec la sortie (24).

7. Dispositif d'actionnement d'urgence (1) selon l'une quelconque des revendications précédentes, dans lequel l'alimentation en gaz sous pression (2) est au moins un réservoir de stockage de gaz.

8. Dispositif d'actionnement d'urgence (1) selon l'une quelconque des revendications précédentes, dans lequel le gaz sous pression est de l'azote.

9. Dispositif d'actionnement d'urgence (1) selon l'une quelconque des revendications précédentes, dans lequel le dispositif de percussion (10) est formé d'un seul tenant avec la soupape de libération rapide de pression (40).

10. Dispositif d'actionnement d'urgence (1) selon la revendication 9, comprenant en outre un moyen élastique (20) sollicitant le piston de percussion (14) dans sa position de stockage.

11. Dispositif d'actionnement d'urgence (1) selon la revendication 10, dans lequel le moyen élastique (20) sollicite le piston de soupape de libération rapide de pression (44) vers une position non activée.

12. Dispositif d'actionnement d'urgence (1) selon la revendication 11, dans lequel le piston de soupape de libération rapide de pression (44) est configuré pour revenir à sa position non activée après la réinitialisation du dispositif de percussion (10).

13. Dispositif d'actionnement d'urgence (1) selon l'une quelconque des revendications précédentes, dans lequel l'évent (38) est configuré pour une ventilation atmosphérique.

14. Porte (70) comprenant un dispositif d'actionnement d'urgence (1) selon l'une quelconque des revendications précédentes, dans laquelle l'actionneur (30) comprend un corps d'actionneur (31) et dans laquelle l'un du corps d'actionneur (31) et du piston d'actionneur (34) est couplé à la porte (70), et l'autre du corps d'actionneur (31) et du piston d'actionneur (34) est couplé à un cadre de porte (72).
